(19) Europäisches Patentamt
European Patent Office
Office européen des brevets

(11) **EP 2 831 619 B1**

(12) **EUROPÄISCHE PATENTSCHRIFT**

(45) Veröffentlichungstag und Bekanntmachung des Hinweises auf die Patenterteilung:
**14.12.2022   Patentblatt 2022/50**

(21) Anmeldenummer: **13712802.1**

(22) Anmeldetag: **28.03.2013**

(51) Internationale Patentklassifikation (IPC):
**G01S 7/41** *(2006.01)*        **G01S 13/89** *(2006.01)*

(52) Gemeinsame Patentklassifikation (CPC):
**G01S 7/411; G01S 13/887; G01S 13/89**

(86) Internationale Anmeldenummer:
**PCT/EP2013/056695**

(87) Internationale Veröffentlichungsnummer:
**WO 2013/144290 (03.10.2013 Gazette 2013/40)**

(54) **VERFAHREN UND VORRICHTUNG ZUR DETEKTION VON STRUKTUREN IN EINEM ZU UNTERSUCHENDEN OBJEKT**

METHOD AND DEVICE FOR DETECTING STRUCTURES IN AN OBJECT TO BE EXAMINED

PROCÉDÉ ET DISPOSITIF DE DÉTECTION DE STRUCTURES DANS UN OBJET À EXAMINER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2012   DE 102012205070
30.04.2012   DE 102012207186**

(43) Veröffentlichungstag der Anmeldung:
**04.02.2015   Patentblatt 2015/06**

(73) Patentinhaber: **Rohde & Schwarz GmbH & Co. KG
81671 München (DE)**

(72) Erfinder: **AHMED, Sherif
81737 München (DE)**

(74) Vertreter: **Rupp, Christian et al
Mitscherlich PartmbB
Patent- und Rechtsanwälte
Sonnenstraße 33
80331 München (DE)**

(56) Entgegenhaltungen:
**DE-A1- 10 346 816        DE-A1-102006 032 735
JP-A- 2007 232 734        US-A1- 2006 087 471
US-B1- 6 573 855**

• **WAI LAM CHAN ET AL: "Imaging with terahertz radiation", REPORTS ON PROGRESS IN PHYSICS, INSTITUTE OF PHYSICS PUBLISHING, BRISTOL, GB, Bd. 70, Nr. 8, 1. August 2007 (2007-08-01) , Seiten 1325-1379, XP020113346, ISSN: 0034-4885, DOI: 10.1088/0034-4885/70/8/R02**

**Beschreibung**

Die Erfindung bezieht sich auf ein Verfahren und eine Vorrichtung zur Detektion von Strukturen wie Kanten auf einem zu untersuchenden Objekt mit einem Antennenarray mit synthetischer Fokussierung.

Aktive bildgebende Antennenanordnungen im Millimeter- und Mikrowellenbereich erlangen zunehmend Bedeutung durch ihre vielfältigen Einsatzmöglichkeiten im medizinischen und im industriellen Bereich. Solche Antennenanordnungen umfassen eine Vielzahl von einzelnen Sende- und Empfangsantennen, wobei hintereinander jeweils eine Antenne ein Signal aussendet und das von einem Objekt reflektierte Signal von allen Empfangsantennen empfangen wird. Dies wird entweder bei einer einzigen Frequenz oder schrittweise bei unterschiedlichen Frequenzen durchgeführt. Dabei werden sowohl der Betrag als auch die Phase des empfangenen Signals erfasst. Durch einen digitalen Strahlformungs-Algorithmus (digital beamforming) kann aus den erfassten Signalen auf die entsprechenden Objektpunkte zurückgerechnet werden, die die empfangenen Signale reflektiert haben und somit eine 3-dimensionale Abbildung des gesamten Körpers erstellt werden.

Eine solche Antennenanordnung wird beispielsweise in der DE 10 2009 040 450 A1 beschrieben. Darin wird eine solche Antennenanordnung zur Erkennung von verdeckten dielektrischen Objekten beschrieben. Dabei wird das ausgesendete Mikrowellensignal am menschlichen Körper aufgrund dessen hohen Wassergehalts und somit hohen Permittivität nahezu total reflektiert. Ein auf dem Körper angeordnetes dielektrisches Objekt reflektiert dagegen aufgrund seiner niedrigeren Permittivität lediglich einen Teil des Signals an der Vorderseite des Objekts, ein weiterer Teil des Signals wird an der Rückseite des Objekts an der Grenzfläche zum menschlichen Körper reflektiert. Aus der Interferenz der beiden teilreflektierten Mikrowellensignale kann auf das Vorhandensein eines dielektrischen Bereichs geschlossen werden und somit das dielektrische Objekt gegenüber dem menschlichen Körper abgegrenzt und sichtbar gemacht werden.

Der Artikel von Wai Lam Chan et al. "Imaging with terahertz radiation" (Reports on Progress in Physics, Bd. 70, Nr. 8, 1. August 2007, Seiten 1325-1379, ISSN: 0034-4885, DOI: 10.1088/0034-4885/70/8/RO2, XP020113346) lehrt, wie mit THz-Strahlung durch Reflektion ein dreidimensionales Bild eines Objekts erzeugt werden kann. Dabei wird die reflektierte THz-Energie als Funktion der Position des Objekts aufgezeichnet. Durch das Vorzeichen der reflektierten Strahlung kann ausgesagt werden, ob der Übergang der THz-Strahlung von Luft zu Plastik oder von Plastik zu Luft stattfindet. Dies folgt aus den Fresnel-Reflexions-Koeffizienten.

Die US 6,573,855 B1 beschreibt, wie mit elektromagnetischen Wellen ein Objekt, welches im Boden vergraben ist, durch die Auswertung eines elektromagnetischen Signals, welches von dem vergrabenen Objekt im Boden reflektiert wird aufgespürt werden kann. Dabei wird das Gerät, welches die elektromagnetischen Wellen sendet und empfängt, über den Boden bewegt. Auf diese Art und Weise wird ein dreidimensionales Bild erzeugt.

Die DE 10 2006 032735 A1 zeigt eine Vorrichtung zum Messen der Beschaffenheit einer Fahrbahn mittels eines Radarsensors, der eine Radarwelle auf die Fahrbahnoberfläche ausstrahlt und das reflektierte Signal auswertet.

Die DE 103 46 816 A1 lehrt ein Verfahren zum Ermitteln von Unregelmäßigkeiten in Bodenformationen. Dies geschieht mithilfe von elektromagnetischen Wellen, welche in die Bodenformationen gesandt und deren Reflektion von der Unregelmäßigkeit empfangen wird. Es werden zumindest Wellen mit zwei verschiedenen Frequenzen ausgesandt.

Die US 2006/087471 A1 lehrt einen Landminendetektor Dabei werden Landminen durch Radarstrahlung entdeckt.

Die JP 2007-232734 A lehrt, wie auf eine nichtdestruktive Art und Weise eine Betonstruktur oder Ähnliches mittels Radiowellen inspiziert werden kann.

Dabei ist es oftmals schwierig, den Rand des Objekts von Strukturen zu unterscheiden, die durch die Ausleuchtungsgrenzen des Objekts entstehen. Des Weiteren ist es wünschenswert, auch die innere Struktur eines dielektrischen Körpers, beispielsweise auf Einflüsse oder Schichten aus einem anderen Material untersuchen zu können. Dies ist insbesondere für die Materialuntersuchung interessant.

Es ist somit die Aufgabe der vorliegenden Erfindung, ein Verfahren und eine Vorrichtung zu schaffen, die es ermöglicht, Kanten auf einem dielektrischen Material zerstörungsfrei und räumlich aufgelöst ermitteln zu können. Insbesondere soll ohne eine mechanische Zerstörung des zu untersuchenden Objekts, dessen innere Struktur bzw. Schichten oder auch Kanten an der Oberfläche des zu untersuchenden Objekts detektiert und bildlich dargestellt werden.

Die gegenwärtige Erfindung wird durch die unabhängigen Ansprüche definiert. In den Unteransprüchen sind vorteilhafte Weiterbildungen der Erfindung dargestellt. Ausführungen, welche im Folgenden als erfindungsgemäße Ausführungsbeispiele dargestellt sind, welche jedoch nicht von dem durch die unabhängigen Ansprüche definierten Schutzumfang abgedeckt sind, sind als für das Verständnis der Erfindung hilfreichen Beispiele, nicht jedoch als Ausführungsbeispiele der Erfindung zu verstehen.

In dem erfindungsgemäßen Verfahren zur Detektion von Kanten auf einem zu untersuchenden Objekt wird das zu untersuchende Objekt mit einem Antennenarray dreidimensional abgetastet. Dabei werden Mikrowellensignale ausgesendet und die von dem zu untersuchenden Objekt reflektierten Signale in Betrag und Phase erfasst. Eine räumliche Position einer Struktur wird aus dem Betrag des reflektierten Signals ermittelt, danach das Vorzeichen des Reflexionskoeffizienten des reflektierten Signal an das zuvor ermittelten räumlichen Position ermittelt und anhand der räumlichen Anordnung des Vorzeichens des Reflexionskoeffizienten die detektierte Struktur identifiziert. Erfindungsgemäß wird eine Kante in einem Material mit hoher Permittivität und/oder Konduktivität ermittelt, wenn in einem räumlichen Bereich eine unregelmäßige Abfolge von positiven und negativen Reflexionskoeffizienten vorliegt.

Somit können Kanten eines dielektrischen Körpers oder einer dielektrischen Schicht auf einem stark reflektierenden Körper von Abbildungsartefakten, die durch Schatten oder andere Ausleuchtungsgrenzen verursacht werden, unterschieden werden. Somit kann das beschriebene Verfahren auch zur Detektion von Kanten in einem Material mit hoher Permittivität oder Konduktivität verwendet werden.

Dazu wird das Reflexionsverhalten von elektromagnetischen Signalen an Grenzschichten zwischen Materialien mit unterschiedlicher Permittivität ausgenutzt. Im Gegensatz zu transmittierten Signalen wechselt das Vorzeichen des Reflexionskoeffizienten, wenn das Signal an einer Grenzschicht zwischen einem Material mit niedrigerer Permittivität zu einem Material mit höherer Permittivität reflektiert wird. Andererseits bleibt das Vorzeichen des Reflexionskoeffizienten unverändert, wenn das Signal an einem Übergang zwischen einem Material mit höherer Permittivität zu einem Material mit niedrigerer Permittivität reflektiert wird. Physikalisch bedeutet ein negativer Reflexionskoeffizient, dass das Signal an der Reflexionsstelle einen Phasensprung von 180° erfährt.

Durch ein gezieltes Absuchen des zu untersuchenden Objekts nach beispielsweise zusammenhängenden Bereichen mit gleichem Phasenverhalten bzw. gleichem Vorzeichen des Reflexionskoeffizienten können somit Materialübergänge identifiziert werden. Da aus den reflektierten Signalen durch ein beispielsweise synthetisches Fokussierungsverfahren das zu untersuchende Objekt 3-dimensional abgetastet werden kann, können Strukturen auch im Inneren des zu untersuchenden Objekts aufgefunden werden.

Vorteilhaft ist es daher, wenn die genaue Position der Struktur bestimmt wird, indem eine zusätzliche Abbildung der Umgebung der ermittelten räumlichen Position mit einem engeren Netz von Abtastpunkten erstellt wird. Somit kann das zu untersuchende Objekt im Bereich einer Struktur mit höherer Auflösung untersucht werden.

Vorteilhaft ist es auch, wenn die genaue räumliche Position der Struktur durch Interpolation des Signalbetrags zwischen Abtastpunkten bestimmt wird. Durch dieses Verfahren kann die Lokalisierung der Grenzschicht verbessert werden ohne ein numerisch aufwendiges Verfahren zur Verfeinerung des Abtastgitters verwenden zu müssen. Eine solche lokale Suche des tatsächlichen Materialübergangs ist notwendig, da eine Struktur oftmals nicht exakt von einem Abtastpunkt getroffen wird.

In vorteilhafter Weise wird das Vorzeichen des Reflexionskoeffizienten durch das Phasenverhalten des reflektierten Signals ermittelt, wobei ein negatives Vorzeichen des Reflexionskoeffizienten vorliegt, wenn ein Phasensprung im reflektierten Signal ermittelt wird und ein positives Vorzeichen des Reflexionskoeffizienten vorliegt, wenn kein Phasensprung im reflektierten Signal, das von der genauen räumlichen Position der Struktur reflektiert wird, ermittelt wird. Durch diese Art der Ermittlung des Vorzeichens des Reflexionskoeffizienten ist es nicht notwendig, den Reflexionskoeffizienten selbst zu berechnen. Es reicht aus, das Phasenverhalten des reflektierten Signals zu untersuchen.

Es ist von Vorteil, wenn ein Phasensprung detektiert wird, wenn die Phase des reflektierten Signals an der genauen Position der Struktur kleiner als -90° oder größer als +90° beträgt, und kein Phasensprung detektiert wird, wenn die Phase des reflektierten Signals an die Position der Struktur kleiner als +90° und größer als -90° beträgt. In einem realen System mit schwankenden Materialeigenschaften und dem Vorhandensein von Rauschen, wird an einem Materialübergang die Phase des Signals nicht exakt unverändert bleiben, noch exakt einen Phasensprung von 180° durchführen, sondern nur in der Nähe dieser theoretischen Werte liegen. Der genannte Wertebereich ermöglicht es immer, eine Entscheidung zu treffen, ob ein Phasensprung vorliegt oder nicht, bei gleichzeitig hoher Übereinstimmung mit dem tatsächlichen Verhalten.

Vorteilhaft ist es ebenfalls, wenn ein Einschluss aus einem Material mit einer Permittivität, die sich von der Permittivität des umgebenden zu untersuchenden Objekts unterscheidet, ermittelt wird, wenn innerhalb des zu untersuchenden Objekts ein zusammenhängender Bereich mit negativem Reflexionskoeffizienten auf einen angrenzenden zusammenhängenden Bereich mit positivem Reflexionskoeffizienten oder umgekehrt folgt. Durch das gezielte Absuchen von Bereichen mit einem gleichen Phasenverhalten bzw. Verhalten des Vorzeichens des Reflexionskoeffizienten können somit Grenzflächen identifiziert werden und zusammenhängende Bereiche mit gleicher Abfolge von negativen oder positiven Vorzeichen des Reflexionskoeffizienten identifiziert werden. Somit kann die Form und die Lage eines solchen Einschlusses ermittelt werden.

Vorteilhafterweise wird ein Einschluss aus einem Material mit einer höheren Permittivität als das Material des umgebenden zu untersuchenden Objekts dann ermittelt, wenn erst ein Bereich mit einem negativen Vorzeichen detektiert wird und nachfolgend ein Bereich mit positiven Reflexionskoeffizienten detektiert wird. Ein Einschluss aus einem Material mit einer niedrigeren Permittivität als das Material des umgebenden zu untersuchenden Objekts liegt dann vor, wenn erst ein Bereich mit positivem Vorzeichen und nachfolgend ein Bereich mit negativen Vorzeichen detektiert werden. Somit können aus der Abfolge der Vorzeichen des Reflexionskoeffizienten bzw. des Phasenverhaltens des Signals auf die relativen Materialeigenschaften des Einschlusses im Bezug auf das umgebende Objekt geschlossen werden.

Die erfindungsgemäße Vorrichtung umfasst ein Antennenarray, das eine Vielzahl von Sende- und Empfangsantennen umfasst, wobei nacheinander jeweils eine Sendeantenne Mikrowellensignale aussendet und alle Empfangsantennen die von dem zu untersuchenden Objekt reflektierten Signale in Betrag und Phase erfassen. Die Vorrichtung enthält des Weiteren eine Auswerteeinheit mit einer Abbildungseinheit, die aus dem erfassten reflektierten Signal eine dreidimensionale Abbildung des zu untersuchenden Objekts rekonstruiert. Dabei weist die Auswerteeinheit des Weiteren eine Lokalisierungseinheit auf, die eine räumliche Position einer Struktur aus dem Betrag des reflektierten Signals ermittelt, eine Phaseneinheit, die das Vorzeichen des Reflexionskoeffizienten des reflektierten Signals an der räumlichen Position der Struktur ermittelt und eine Gruppierungseinheit, die die Struktur anhand der räumlichen Anordnung des Vorzeichens des Reflexionskoeffizienten identifiziert. Erfindungsgemäß ist die Gruppierungseinheit so ausgebildet ist, dass sie eine Kante in einem Material mit hoher Permittivität und/oder Konduktivität in dem zu untersuchenden Objekt ermittelt, wenn in einem räumlichen Bereich eine unregelmäßige Abfolge von positiven und negativen Reflexionskoeffizienten vorliegt.

Somit können ohne eine mechanische Zerstörung des zu untersuchenden Objekts, dessen innere Struktur bzw. Schichten oder auch Kanten an der Oberfläche des zu untersuchenden Objekts detektiert und bildlich dargestellt werden. Somit können insbesondere Umrisse eines Dielektrikums z.B. auf der menschlichen Haut von Abbildungsartefakten durch Ausleuchtungsgrenzen identifiziert werden.

Vorteilhafterweise ist die Lokalisierungseinheit derart ausgebildet, dass sie die genaue räumliche Position der Struktur durch Interpolation des Signalbetrags zwischen den Abtastpunkten und/oder durch das Erstellen einer weiteren Abbildung der Umgebung der ursprünglich ermittelten räumlichen Position mit einem engeren Netz von Abtastpunkten bestimmt. Somit kann bei einem Hinweis auf eine Struktur das benachbarte Gebiet mit einer höheren Genauigkeit untersucht werden um eine eindeutige Bestimmung des Phasenverhaltens zu ermöglichen. Vorteilhafterweise ist die Phaseneinheit derart ausgebildet, dass Sie das Vorzeichen des Reflexionskoeffizienten aus dem Phasenverhalten des reflektierten Signals ermittelt, wobei ein negatives Vorzeichen des Reflexionskoeffizienten vorliegt, wenn sie einen Phasensprung im reflektierten Signal ermittelt und ein positives Vorzeichen vorliegt, wenn sie einen stetigen Verlauf im reflektierten Signal ermittelt. Dabei wird ein Phasensprung dann detektiert, wenn die Phase des reflektierten Signals an der Position der Struktur kleiner als -90° oder größer als +90°, und kein Phasensprung detektiert, wenn die Phase des reflektierten Signals kleiner als +90° und größer als -90° beträgt. Somit kann in einfacher Weise ohne Berechnung des Reflexionskoeffizienten selbst das Vorzeichen des Reflexionskoeffizienten bestimmt werden. Dies ist auch möglich, wenn das Signal durch Rauschen oder kleine Materialschwankungen gestört ist.

Vorteilhaft ist es, wenn die Gruppierungseinheit derart ausgebildet ist, dass sie eine räumliche Ausdehnung und eine räumliche Form einer Grenzfläche eines Materialübergangs durch zusammenhängende Bereiche mit gleichem Phasenverhalten identifiziert. Somit können Einschlüsse im Inneren eines Dielektrikums entdeckt, lokalisiert und in ihrer Größe und Form erkannt werden.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert.

Es zeigen:

Fig. 1    ein Ausführungsbeispiel einer erfindungsgemäßen Vorrichtung zur Detektion von Strukturen schematischer Darstellung;

Fig. 2    ein Diagramm zum erfindungsgemäßen Ermitteln der Position sowie des Phasenverhaltens an einer Struktur;

Fig. 3    ein erstes zu untersuchendes objekt

Fig. 4    ein zweites zu untersuchendes Objekt mit dielektrischer Schicht und Kante sowie dessen erfindungsgemäße Abbildung und

Fig. 5    ein Ausführungsbeispiel des erfindungsgemäßen Verfahrens als Ablaufdiagramm.

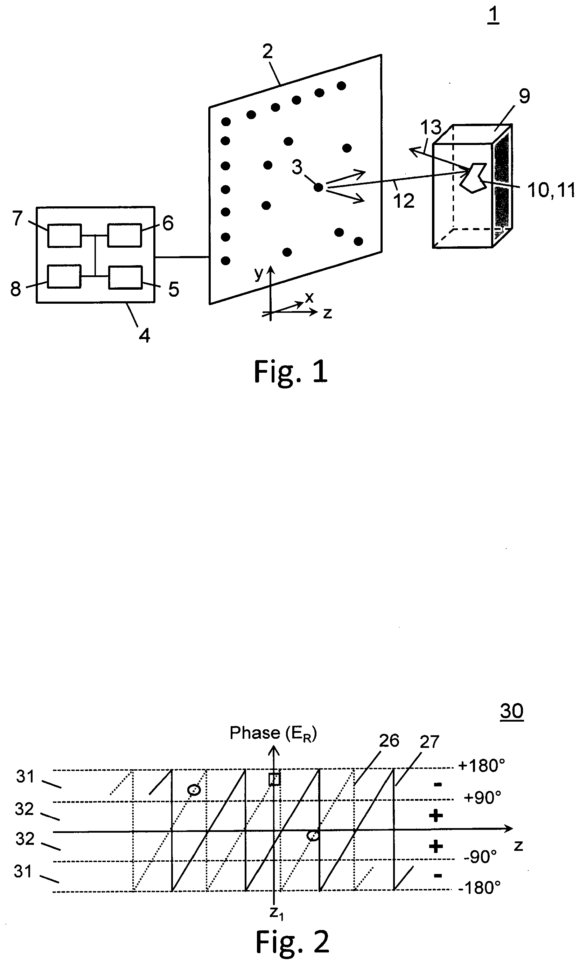

Fig. 1 zeigt eine erfindungsgemäße Vorrichtung 1 zur Detektion von Strukturen 10, wie z.B. Materialübergänge und Kanten, in einem dielektrischen Objekt. Die Vorrichtung umfasst ein Antennenarray 2, das eine Vielzahl von Sende-/Empfangsantennen 3 enthält, die beispielsweise auf einer ebenen oder zylindrisch gekrümmten Oberfläche angeordnet sind. Dabei sendet nacheinander jeweils eine Sendeantenne, ein Mikrowellensignal 12 aus, das von einem zu untersuchenden Körper 9 reflektiert wird. Das reflektierte Signal 13 wird nun von allen Empfangsantennen empfangen und der Betrag sowie die Phase des reflektierten Signals erfasst. Die verwendeten Signale weisen bevorzugt eine Frequenz im Bereich zwischen 30 GHz und 500 GHz, besonders bevorzugt im Bereich zwischen 50 GHz und 300 GHz, auf. Die Signale werden dabei durch eine synthetische Fokussierung z.B. durch einen digitalen Strahlformungs-Algorithmus fokussiert, sodass das zu untersuchende Objekt 9 an einem 3-dimensional angeordneten Gitter von Abtastpunkten betrachtet wird.

Trifft das eingestrahlte Signal $E_I$ 12 auf eine Grenzfläche zwischen zwei Materialien mit unterschiedlicher Impedanz $\eta$, so wird bei einem Übergang von einem Material mit hoher Impedanz $\eta_1$ zu einem Material mit niedrigerer Impedanz $\eta_2$ die Phase des reflektierten Signals $E_R$ 13 um 180° geändert, d.h. es tritt ein Phasensprung auf. Wird dagegen das Signal an der Grenzfläche zwischen einem Material mit niedriger Impedanz $\eta_1$ zu einem Material mit höherer Impedanz $\eta_2$ reflektiert, so bleibt die Phase erhalten. Dies ist bekannt durch den Reflexionskoeffizient $\Gamma^b$ mit

$$\Gamma^b = \frac{\eta_2 - \eta_1}{\eta_2 + \eta_1} = \frac{E_R}{E_I}$$

Im Bezug auf die Permittivität $\varepsilon_i$ des Materials

ergibt sich mit $\eta_i = \sqrt{\dfrac{\mu_i}{\varepsilon_i}}$ der Reflexionskoeffizient $\Gamma^b$ zu

$$\Gamma^b = A \cdot \left( \frac{1}{\varepsilon_2} - \frac{1}{\varepsilon_1} \right)$$

wobei A ein positiver Faktor ist. D.h. der Reflexionskoeffizient hat ein negatives Vorzeichen bzw. das reflektierte Signal $E_R$ weist einen Phasensprung auf, wenn das einfallende Signal $E_I$ an einem Materialübergang von einem Material mit $\varepsilon_1$ zu einem Material mit $\varepsilon_2$ übergeht und gilt $\varepsilon_1 < \varepsilon_2$. Der Reflexionskoeffizient hat ein positives Vorzeichen bzw. das reflektierte Signal $E_R$ weist einen stetigen Verlauf auf, wenn das einfallende Signal $E_I$ an einem Materialübergang von einem Material mit $\varepsilon_1$ zu einem Material mit $\varepsilon_2$ übergeht und gilt $\varepsilon_1 > \varepsilon_2$

Dieser Effekt wird nun zur Detektion von Strukturen 10, wie z.B. Materialeinschlüssen 11, zur Detektion von Schichten und deren Begrenzungen auf einem zu untersuchenden Objekt, zur Detektion von Kanten an Materialien mit hoher Permittivität, beispielsweise Wasser, oder hoher Konduktivität, wie z.B. Metallen, oder zur Detektion von Abbildungsartefakten an Ausleuchtungsgrenzen, verwendet.

Dazu wird das erfasste reflektierte Signal 13 von der Antennenvorrichtung 2 an eine Auswerteeinheit 4 weitergegeben. In einer Lokalisierungseinheit 6 wird nun an allen Abtastpunkten der Betrag des reflektierten Signals ermittelt. Abtastpunkte mit einem hohen Signalbetrag deuten dabei auf einen Grenzschicht, die ein Signal reflektiert hat, hin. Da diese Abtastpunkte oftmals räumlich nicht direkt mit der Struktur zusammenfallen, muss die genaue räumliche Position einer Struktur durch eine lokale Suche in einem begrenzten Bereich um den ursprünglich ermittelten Abtastpunkt ermittelt werden.

Dies kann entweder durch eine weitere Abbildung mit einem stärker auflösenden Antennenarray, das ein engeres Gitter an Abtastpunkten ermöglicht, durchgeführt werden oder kann durch eine Interpolation des Empfangssignals zwischen den Abtastpunkten erreicht werden. Die Lokalisierungseinheit 6 umfasst die entsprechenden Mittel, um diese lokale Suche der genauen Position der Struktur 10 durchzuführen. In der Phaseneinheit 7 wird nun das Phasenverhalten des Signals 13 an der ermittelten Position der Struktur 10 aus dem erfassten reflektierten Signal 13 ermittelt.

In einer Gruppierungseinheit 8 werden nun die ermittelten Phasenübergänge bzw. damit gleichgesetzte Vorzeichen des Reflexionskoeffizienten entsprechend der räumlichen Position des Abtastpunktes zu einem dreidimensionalen Bild oder auch einer Karte gruppiert. Aus der räumlichen Anordnung und der Abfolge der ermittelten Phasenübergänge können so Einschlüsse oder Kanten identifiziert werden. In einer Abbildungseinheit 5 wird eine Abbildung des zu untersuchenden Objekts 9 mit den Strukturen 10 erstellt.

Fig. 2 zeigt anhand eines beispielhaften reflektierten Signals wie nun die Position einer Struktur aus dem ermittelten Betrag des reflektierten Signals und der ermittelten Phase bestimmt wird. Um die genaue Position einer Struktur zu ermitteln, wird der Betrag des reflektierten Signals an den Abtastpunkten 21, 22, 23, 24 ermittelt. Deuten erhöhte Werte im Betrag, wie beispielsweise am Abtastpunkt 22 und 23, auf eine mögliche Struktur hin, so wird zunächst die genaue räumliche Position hier, beispielsweise die genauere Position in z-Richtung bestimmt. Dazu kann eine weitere Abbildung mit einem engeren Gitter an Abtastpunkten in einem begrenzten Bereich um die Koordinaten der vermeintlichen Lage der Struktur erstellt werden.

Die genaue Position einer Struktur in der Umgebung der bereits identifizierten Abtastpunkte 22, 23 kann ebenfalls durch Interpolation zwischen den Abtastpunkten ermittelt werden. Der Abstand zwischen den Abtastpunkten ist dabei gleich oder nahe der physikalischen Auflösung des Abbildungssystems aus Antennenvorrichtung 2 und Auswerteeinrichtung 4.

In Diagramm 30 ist die Phase des reflektierten Signals über der Koordinate z, in Blickrichtung auf das zu untersuchende Objekt, dargestellt. Das Diagramm 30 zeigt, zwei mögliche Phasenverläufe 26, 27. Die gestrichelte Kurve 26 zeigt die Phase eines Signals $E_R$, die in der Position $z_1$ der Struktur einen Phasensprung aufweist. Die Kurve 27 zeigt dagegen in $z_1$ einen stetigen Verlauf und somit hat das reflektierte Signal $E_R$ seine Phase bei der Reflexion nicht geändert.

Da in einem realen System Rauschen sowie variierende Materialeigenschaften vorliegen, wird bei $z_1$ der Phasenwert 0 bzw. +/-180° nicht exakt, sondern lediglich ein nahegelegener Wert, getroffen. Um dieser Ungenauigkeit Rechnung zu tragen, wird ein Phasensprung bzw. ein negatives Vorzeichen des Reflexionskoeffizienten angenommen, wenn der ermittelte Phasenwert an der Position der Struktur im Bereich 31 liegt und somit größer als 90° bzw. kleiner als -90° ist, und kein Phasensprung und somit ein positives Vorzeichen des Reflexionskoeffizienten angenommen, wenn der ermittelte Phasenwert im Bereich 32 liegt, also einen Wert kleiner als 90° und größer als -90° aufweist. Hier ergibt sich durch die bei den Abtastpunkten 22 und 23 vorliegenden Phasenwerte die Kurve 27 und somit liegt an der Position der Struktur $z_1$ ein Phasensprung vor.

Nach der Ermittlung der räumlichen Position und des Phasenverhaltens der reflektierten Signale werden zusammenhängende Bereiche mit gleichem Vorzeichen bzw. Abfolgen von solchen zusammenhängenden Bereichen identifiziert und eine dreidimensionalen Abbildung des ermittelten Phasenverhaltens in dem zu untersuchenden Objekt 9 erstellt.

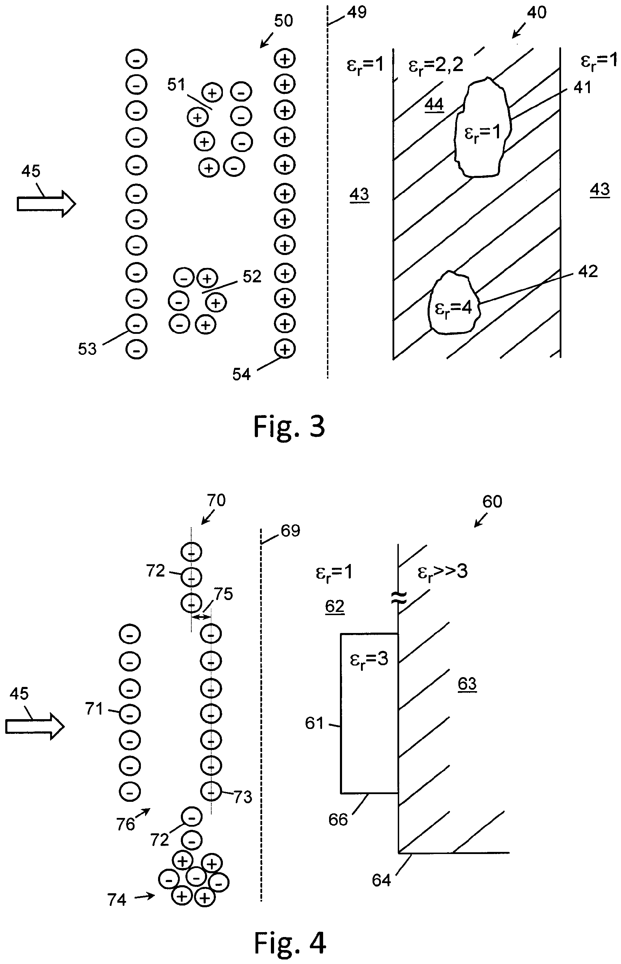

Eine solche Abbildung 50 ist in Fig. 3 links von der gestrichelten Linie 49 dargestellt. Rechts der Linie 49 ist das zu untersuchende Objekt 40 dargestellt. Das dielektrische Objekt 40 besteht hauptsächlich aus einem Material 44 mit einer Permittivität von beispielsweise $\varepsilon_r$=2,2. Es weist einen Einschluss 41 mit einem Wert von $\varepsilon_r$=1, der ungefähr z.B. Luft oder einem anderen Gas entspricht, auf. Ein weiterer Einschluss 42 hat die Permittivität $\varepsilon_r$=4. Das Objekt 40 wird z.B. von Luft 43 mit einem Permittivität von $\varepsilon_r$=1 umgeben. Die in Einfallsrichtung 45 des Signals erste detektierte Struktur ist die Grenzfläche zwischen der umgebenden Luft 43 und dem dielektrischen Körper 40. Dabei handelt es sich um einen Übergang zu einem Material mit höherer Permittivität und das reflektierte Signal weist entsprechend einen Phasensprung auf. Dies ist hier durch das entsprechende negative Vorzeichen des Reflexionskoeffizienten der Anordnung 53 dargestellt.

Ein Teil des Signals dringt weiter in das zu untersuchende Objekt 40 ein und erfährt an der Grenzfläche zum Einschluss 41 wiederum eine Teilreflexion. Da hier ein Übergang von einem Material mit höherer Permittivität zu einem Material mit niedrigerer Permittivität vorliegt, tritt kein Phasensprung auf, siehe positive Vorzeichen der linken Begrenzung der Abbildung des Einschlusses 51. Ein weiterer Teil des Signals wird beim Austritt aus dem Einschluss 41 in das umgebende Material 44 mit höherer Permittivität mit einem Phasensprung reflektiert, siehe negative Vorzeichen am rechten Rand der Abbildung des Einschlusses 51. Ein Teil des Signals wird nun an der Grenzfläche zwischen dem Material 44 und der umgebenden Luft 43 ohne Phasensprung reflektiert und in der Abbildung 50 durch die Werte 54 abgebildet. Der Einschluss 41 ist in der Abbildung 50 deutlich durch die Anordnung 51 von positiven und negativen Reflexionskoeffizienten erkennbar.

Durch diese Gruppierung des Phasenverhaltens bzw. des Vorzeigens des Reflexionskoeffizienten können somit Einschlüsse und deren relative Permittivität gegenüber dem umgebenden Material ermittelt werden. Ein Einschluss 42 mit einer höheren Permittivität als das umgebende Material 44 des zu untersuchenden Objekts 40 ergibt die Anordnung 52 in der Abbildung. Dabei ist durch den Wechsel von negativen Reflexionskoeffizienten zu positiven Reflexionskoeffizienten ein Einschluss mit höherer Permittivität als das umgebende Material erkennbar.

Durch diese räumliche Bestimmung des Phasenverhaltens des reflektierten Signals können auch Objekte auf einem Material mit beispielsweise hoher Permittivität oder hoher Konduktivität, wie Wasser bzw. Metall, identifiziert werden. Dabei ist es insbesondere möglich, Abbildungsartefakte durch Ausleuchtungsgrenzen von Kanten des dielektrischen Materials zu unterscheiden. Diese Unterscheidung stellt bei bekannten Abbildungsverfahren ein Problem dar.

Fig. 4 zeigt eine solche Anordnung. Rechts der gestrichelten Linie 69 ist ein Objekt 60 mit einer sehr hohen Permittivität, z.B. $\varepsilon_r$>>3, eingezeichnet. Dies könnte beispielsweise die Haut eines menschlichen Körpers sein. Darauf ist ein dielektrischer Körper angeordnet, der eine sehr viel kleinere Permittivität von beispielsweise $\varepsilon_r$=3 gegenüber dem Material 63 aufweist. Diese Anordnung sei beispielsweise von Luft oder einem anderem Dielektrikum 62 mit einer geringen Permittivität von beispielsweise $\varepsilon_r$=1 umgeben. In Blickrichtung 45 auf die Anordnung ergibt sich die links der Linie 69 dargestellte Abbildung 70. Der Materialübergang zwischen umgebender Luft 62 und Dielektrikum 61 wird durch eine Gruppierung 71 von negativen Reflexionskoeffizienten sichtbar. Die Grenzfläche zwischen der umgebenden Material 62 und dem Körper 60 wird als Gruppierung 72 oberhalb und unterhalb des dielektrischen Materials 61 abgebildet.

Die an der Grenzfläche zwischen Dielektrikum 61 und Material 60 reflektierten Signale bilden eine Anordnung 73 an negativen Vorzeichen des Reflexionskoeffizienten, da auch hier ein Übergang zu einem Material mit höherer Permittivität vorliegt. Die Anordnung 73 ist mit einem Versatz 75 zur Anordnung 72 dargestellt, da die Laufzeit des Signals durch das Material 61 mit höherer Permittivität länger ist als durch ein Material 62 mit niedrigerer Permittivität.

Treffen Signale auf eine Kante 64 des Materials 63 mit hoher Permittivität oder hoher Konduktivität auf, werden diese Signale mit unterschiedlichem Phasenverhalten reflektiert. Dies ist in der Abbildung 70 durch einen Bereich 74 mit unregelmäßiger, chaotischer Abfolge von positiven bzw. negativen Reflexionskoeffizienten sichtbar. Kanten 66 an den dielektrischen Körper 61 zeigen dagegen kein solches chaotisches Verhalten, denn von dem dielektrischen Material wird das Signal viel weniger stark reflektiert.

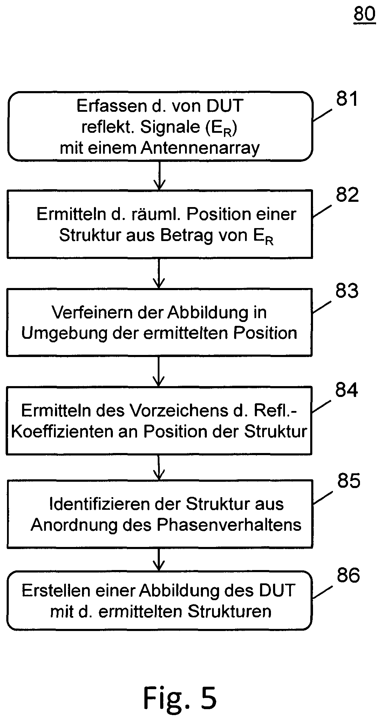

Fig. 5 zeigt den Ablauf des Verfahrens zur Ermittlung von Strukturen wie Materialübergangen oder Kanten in einem Dielektrikum in Form eines Ablaufdiagramms 80. Im ersten Verfahrensschritt 81 werden von einem Antennenarray die von dem zu untersuchenden Objekt reflektierten Signale ($E_R$) erfasst. Durch die dreidimensionale Fokussierung mithilfe der genannten synthetischen oder auch eine physikalische Fokussierungsmethode werden nun die Abtastpunkte mit einem erhöhten Betrag des reflektierten Signals ermittelt. Im Verfahrensschritt 83 wird die Auflösung in der Umgebung einer ermittelten Struktur verfeinert und im Verfahrensschritt 84 dort das Phasenverhalten des reflektierten Signals ermittelt. Aus der Anordnung des Phasenverhaltens, dargestellt beispielsweise durch das Vorzeichen des Reflexionskoeffizienten, kann die Art der Struktur und auch Information über die Permittivität der Struktur ermittelt werden, siehe 85. In Verfahrensschritt 86 wird eine Abbildung des zu untersuchenden Objekts 9 und den ermittelten Strukturen 10 erstellt.

Eine solche Abbildung kann beispielsweise für die Materialuntersuchung von Dielektrika eingesetzt werden. Das Verfahren kann aber auch beispielsweise bei Körperscannern verwendet werden, um dielektrische Materialen gegenüber dem Körper sichtbar zu machen. Dabei können insbesondere schlecht oder nicht ausgeleuchtete Bereiche von Kanten eines Dielektrikums unterschieden werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.


**Patentansprüche**

1.  Verfahren zur Detektion von Strukturen (10), wobei die Strukturen Kanten sind, auf einem zu untersuchenden Objekt (9) mit einer Antennenvorrichtung (2), von der Mikrowellensignale (12) ausgesendet und von der die von dem zu untersuchenden Objekt (9) reflektierten Signale (13) in Betrag und Phase erfasst werden und daraus eine 3-dimensionale Abbildung des zu untersuchenden Objekts (9) rekonstruiert wird,
    mit den Verfahrensschritten

      - Ermitteln einer räumlichen Position (82) einer Struktur aus dem Betrag der reflektierten Signale,
      - Ermitteln des Vorzeichens der Reflexionskoeffizienten (84) der reflektierten Signale an der räumlichen Position der Struktur, und
      - Identifizieren von Strukturen (85) anhand der räumlichen Anordnung des Vorzeichens des Reflexionskoeffizienten

    **dadurch gekennzeichnet,**
    **dass** eine Kante (64) in einem Material (63) mit hoher Permittivität und/oder Konduktivität ermittelt wird, wenn in einem räumlichen Bereich (74) eine unregelmäßige Abfolge von positiven und negativen Reflexionskoeffizienten detektiert wird.

2.  Verfahren nach Anspruch 1,
    **dadurch gekennzeichnet,**
    **dass** die genaue räumliche Position der Struktur bestimmt wird, indem eine Abbildung im Bereich der ursprünglich ermittelten räumlichen Position mit einem engeren Gitter von Abtastpunkten (21, 22, 23, 24) erstellt wird.

3.  Verfahren nach Anspruch 1 oder 2,
    **dadurch gekennzeichnet,**
    **dass** die genaue räumliche Position der Struktur durch Interpolation des Signalbetrags zwischen Abtastpunkten (21, 22, 23, 24) im Bereich der ursprünglich ermittelten räumlichen Position bestimmt wird.

4.  Verfahren nach einem der Ansprüche 1 bis 3,
    **dadurch gekennzeichnet,**
    **dass** das Vorzeichen des Reflexionskoeffizienten aus dem Phasenverhalten des reflektierten Signals (13) ermittelt wird, wobei ein negatives Vorzeichen des Reflexionskoeffizienten vorliegt, wenn ein Phasensprung (26) im reflektierten Signal (13) ermittelt wird und ein positives Vorzeichen des Reflexionskoeffizienten vorliegt, wenn ein stetiger Verlauf der Phase (27) des reflektierten Signals (13) ermittelt wird.

5.  Verfahren nach Anspruch 1 bis 4,
    **dadurch gekennzeichnet,**
    **dass** die räumliche Ausdehnung und die räumliche Form einer Grenzfläche eines Materialübergangs durch zusammenhängende Bereiche (51, 52, 53, 54, 71, 72, 73) mit gleichem Phasenverhalten identifiziert werden.

6.  Verfahren nach einem der Ansprüche 1 bis 5,
    **dadurch gekennzeichnet,**
    **dass** ein Einschluss (41, 42) aus einem Material mit einer Permittivität, die sich von der Permittivität des umgebenden zu untersuchenden Objekts (44) unterscheidet, ermittelt wird, wenn innerhalb des zu untersuchenden Objekts (44) ein zusammenhängender Bereich mit negativem Vorzeichen auf einen angrenzenden zusammenhängenden Bereich mit positivem Vorzeichen oder umgekehrt folgt.

7.  Verfahren nach Anspruch 6,
    **dadurch gekennzeichnet,**
    **dass** der Einschluss (42) ein Material mit einer höheren Permittivität als das Material des umgebenden zu untersuchenden Objekts (44) aufweist, wenn erst ein zusammenhängender Bereich mit negativem Vorzeichen und nachfolgend ein zusammenhängender Bereich mit positivem Vorzeichen detektiert werden, und der Einschluss (41) ein Material mit einer niedrigeren Permittivität als das Material (44) des umgebenden zu untersuchenden Objekts aufweist, wenn erst ein zusammenhängender Bereich mit positivem Vorzeichen und nachfolgend ein zusammenhängender Bereich mit negativem Vorzeichen detektiert werden.

8.  Vorrichtung zur Detektion von Strukturen, wobei die Strukturen Kanten sind, auf einem zu untersuchenden Objekt (9) mit

einer Antennenvorrichtung (2), die eine Vielzahl von Sende- und Empfangsantennen (3) umfasst, wobei nacheinander jeweils eine Sendeantenne (3) Mikrowellensignale (12) aussendet und alle Empfangsantennen (3) die von dem zu untersuchenden Objekt (9) reflektierten Signale (13) in Betrag und Phase erfassen und

einer Auswerteinheit (4), die eine Abbildungseinheit (5) aufweist, die aus den erfassten reflektierten Signalen (13) eine 3-dimensionale Abbildung des zu untersuchenden Objekts (9) rekonstruiert,

wobei die Auswerteinheit (4) des Weiteren aufweist:

> eine Lokalisierungseinheit (6), die eine räumliche Position einer Struktur aus dem Betrag der reflektierten Signale (13) ermittelt,
>
> eine Phaseneinheit (7), die das Vorzeichen des Reflexionskoeffizienten der reflektierten Signale (13) an der räumlichen Position der Struktur ermittelt, und
>
> eine Gruppierungseinheit (8), die die Struktur anhand der räumlichen Anordnung des Vorzeichens des Reflexionskoeffizienten identifiziert,
>
> **dadurch gekennzeichnet,**
> **dass** die Gruppierungseinheit (8) derart ausgebildet ist, dass sie eine Kante in einem Material (64) mit hoher Permittivität in dem zu untersuchenden Objekt ermittelt, wenn in einem räumlichen Bereich eine unregelmäßige Abfolge von positiven und negativen Reflexionskoeffizienten (74) vorliegt.

9. Vorrichtung nach Anspruch 8,
**dadurch gekennzeichnet,**
**dass** die Lokalisierungseinheit (6) derart ausgebildet ist, dass sie die genaue räumliche Position der Struktur durch Interpolation des Signalbetrags zwischen Abtastpunkten (21, 22, 23, 24) und/oder durch das Erstellen einer weiteren Abbildung im Bereich der ursprünglich ermittelten räumlichen Position mit einem engeren Gitter von Abtastpunkten (22, 23, 24) bestimmt.

10. Vorrichtung nach Anspruch 8 oder 9,

**dadurch gekennzeichnet,**
**dass** die Phaseneinheit (7) derart ausgebildet ist, dass sie das Vorzeichen des Reflexionskoeffizienten aus dem Phasenverhalten des reflektierten Signals (13) ermittelt,
wobei ein negatives Vorzeichen des Reflexionskoeffizienten vorliegt, wenn sie einen Phasensprung (26) im reflektierten Signal ermittelt, und wobei

ein positives Vorzeichen des Reflexionskoeffizienten vorliegt, wenn sie einen stetigen Verlauf der Phase (27) des reflektierten Signals ermittelt.

11. Vorrichtung nach einem der Ansprüche 8 bis 10,
**dadurch gekennzeichnet,**
**dass** die Gruppierungseinheit (8) derart ausgebildet ist, dass sie eine räumliche Ausdehnung und eine räumliche Form einer Grenzfläche eines Materialübergangs durch zusammenhängende Bereiche (51, 52, 53, 54, 71, 72, 73) mit gleichem Phasenverhalten identifiziert.

12. Vorrichtung nach einem der Ansprüche 8 bis 11,
**dadurch gekennzeichnet,**
**dass** die Gruppierungseinheit (8) derart ausgebildet ist, dass sie einen Einschluss (41, 42) aus einem Material mit einer Permittivität, die sich von der Permittivität des umgebenden zu untersuchenden Objekts (44) unterscheidet, ermittelt, wenn innerhalb des zu untersuchenden Objekts (9) ein zusammenhängender Bereich mit negativem Vorzeichen auf einen angrenzenden zusammenhängenden Bereich mit positivem Vorzeichen oder umgekehrt (51, 52) folgt.

13. Vorrichtung nach einem der Ansprüche 8 bis 12,
**dadurch gekennzeichnet,**
**dass** die Gruppierungseinheit (8) derart ausgebildet ist, dass sie einen Einschluss (42) aus einem Material mit einer höheren Permittivität als das Material (44) des zu untersuchenden Objekts (9) ermittelt, wenn innerhalb des zu untersuchenden Objekts (9) erst ein Bereich mit negativem Vorzeichen und nachfolgend ein Bereich mit positivem Vorzeichen (52) detektiert ist oder dass sie einen Einschluss (41) aus einem Material mit einer niedrigeren Permittivität als das Material (44) des zu untersuchenden Objekts (9) ermittelt, wenn erst ein Bereich mit positivem Vorzeichen und nachfolgend ein Bereich mit negativem Vorzeichen (51) detektiert ist.

14. Vorrichtung nach einem der Ansprüche 8 bis 13,
**dadurch gekennzeichnet,**
**dass** die Abbildungseinheit (5) die ermittelten räumlichen Strukturen (10) darstellt und/oder die ermittelte Permittivität der Strukturen (10) darstellt.

## Claims

1. Method for detecting structures (10), the structures being edges, on an object (9) under investigation, using an antenna arrangement (2) from which microwave signals (12) are transmitted and from which the signals (13) reflected from the object (9) under investigation are registered in magnitude and phase, and a three-dimensional image of the object (9) under investigation is reconstructed from these, comprising the method steps

- determining a spatial position (82) of a structure from the magnitude of the reflected signals,
- determining the sign of the reflection coefficients (84) of the reflected signals at the spatial position of the structure, and
- identifying structures (85) on the basis of the spatial arrangement of the sign of the reflection coefficient,

**characterized in that**
an edge (64) in a material (63) with high permittivity and/or conductivity is determined if an irregular sequence of positive and negative reflection coefficients is detected in a spatial region (74).

2. Method according to claim 1,
**characterized in that**
the precise spatial position of the structure is determined by preparing an image in the region of the originally determined spatial position with a narrower grid of sampling points (21, 22, 23, 24).

3. Method according to claim 1 or 2,
**characterized in that**
the precise spatial position of the structure is determined by interpolation of the signal magnitude between sampling points (21, 22, 23, 24) in the region of the originally determined spatial position.

4. Method according to any one of claims 1 to 3,
**characterized in that**
the sign of the reflection coefficient is determined from the phase behavior of the reflected signal (13), wherein a negative sign of the reflection coefficient is present if a sudden phase change (26) is determined in the reflected signal (13), and a positive sign of the reflection coefficient is present if a steady course of the phase (27) of the reflected signal (13) is determined.

5. Method according to claim 1 to 4,
**characterized in that**
the spatial extension and the spatial shape of a limiting surface of a material transition are identified through coherent regions (51, 52, 53, 54, 71, 72, 73) with identical phase behavior.

6. Method according to any one of claims 1 to 5,
**characterized in that**
an inclusion (41, 42) made from a material with a permittivity which differs from the permittivity of the surrounding object (44) under investigation is determined if, within the object (44) under investigation, a coherent region with a negative sign follows an adjacent coherent region with a positive sign or vice versa.

7. Method according to claim 6,
**characterized in that**
the inclusion (42) comprises a material with a relatively higher permittivity than the material of the surrounding object (44) under investigation if a coherent region with a negative sign is initially detected, and following this, a coherent region with a positive sign is detected, and the inclusion (41) provides a material with a relatively lower permittivity than the material (44) of the surrounding object under investigation if a coherent region with a positive sign is initially detected, and following this, a coherent region with a negative sign is detected.

8. Device for detecting structures, the structures being edges, on an object (9) under investigation, comprising

an antenna arrangement (2) which provides a plurality of transmission and reception antennas (3), wherein each transmission antenna (3) transmits microwave signals (12) in succession, and all of the reception antennas (3) register the signals (13) reflected from the object (9) under investigation in magnitude and phase, and
an evaluation unit (4), which provides an imaging unit (5) which reconstructs a three-dimensional image of the object (9) under investigation from the registered, reflected signals (13), wherein the evaluation unit (4) further provides:

a localization unit (6) which determines a spatial position of a structure from the magnitude of the reflected signals (13), a phase unit (7) which determines the sign of the reflection coefficient of the reflected signals (13) at the spatial position of the structure, and a grouping unit (8) which identifies the structure on the basis of the spatial arrangement of the sign of the reflection coefficient,
**characterized in that**
the grouping unit (8) is embodied in such a manner that it determines an edge in a material (64) with high permittivity in the object under investigation if an irregular sequence of positive and negative reflection coefficients (74) is present in a spatial region.

9. Device according to claim 8,
**characterized in that**
the localization unit (6) is embodied in such a manner that it determines the precise spatial position of the structure by interpolation of the signal magnitude between sampling points (21, 22, 23, 24) and/or by preparing a further image in the region of the originally determined spatial position with a narrower grid of sampling points (22, 23, 24).

10. Device according to claim 8 or 9, **characterized in that** the phase unit (7) is embodied in such a manner that it determines the sign of the reflection coefficient from the phase behavior of the reflected signal (13), wherein a negative sign of the reflection coefficient is present if it determines a sudden phase change (26) in the reflected signal, and wherein a positive sign of the reflection coefficient is present if it determines a steady course of the phase (27) of the reflected signal.

11. Device according to any one of claims 8 to 10, **characterized in that** the grouping unit (8) is embodied in such a manner that it identifies a spatial extension and a spatial shape of a limiting surface of a material transition through coherent regions (51, 52, 53, 54, 71, 72, 73) with identical phase behavior.

12. Device according to any one of claims 8 to 11, **characterized in that** the grouping unit (8) is embodied in such a manner that it determines an inclusion (41, 42) made from a material with a permittivity which differs from the permittivity of the surrounding object (44) under investigation if a coherent region with a negative sign follows an adjacent coherent region with a positive sign within the object (9) under investigation or vice versa (51, 52).

13. Device according to any one of claims 8 to 12, **characterized in that** the grouping unit (8) is embodied in such a manner that it determines an inclusion (42) made from a material with a relatively higher permittivity than the material (44) of the object (9) under investigation if a region with a negative sign is initially detected, and following this, a region with a positive sign (52) is detected within the object (9) under investigation or that it determines an inclusion (41) made from a material with a relatively lower permittivity than the material (44) of the object (9) under investigation if a region with a positive sign is initially detected, and following this, a region with a negative sign (51) is detected.

14. Device according to any one of claims 8 to 13, **characterized in that** the imaging unit (5) displays the determined spatial structures (10) and/or displays the determined permittivity of the structures (10).

**Revendications**

1. Procédé pour la détection de structures (10), dans lequel les structures sont des arêtes, sur un objet (9) à examiner avec un dispositif d'antenne (2), par lequel des signaux hyperfréquence (12) sont émis et par lequel les signaux (13) réfléchis par l'objet (9) à examiner sont acquis en valeur et phase et une représentation tridimensionnelle de l'objet (9) à examiner est reconstituée à partir de ceux-ci, avec les étapes de procédé

- détermination d'une position spatiale (82) d'une structure à partir de la valeur des signaux réfléchis,
- détermination du signe des coefficients de réflexion (84) des signaux réfléchis au niveau de la position spatiale de la structure, et
- identification de structures (85) sur la base de la disposition spatiale du signe du coefficient de réflexion

**caractérisé en ce** **qu'**une arête (64) dans une matière (63) avec une permittivité et/ou conductivité élevée est déterminée, lorsqu'une succession irrégulière de coefficients de réflexion positifs et négatifs est détectée dans une zone spatiale (74).

2. Procédé selon la revendication 1, **caractérisé en ce** **que** la position spatiale exacte de la structure est définie du fait qu'une reproduction dans la zone de la position spatiale initialement déterminée est créée avec une grille plus étroite de points de balayage (21, 22, 23, 24).

3. Procédé selon la revendication 1 ou 2, **caractérisé en ce** **que** la position spatiale exacte de la structure est définie par interpolation de la valeur de signal entre les points de balayage (21, 22, 23, 24) dans la zone de la position spatiale initialement déterminée.

4. Procédé selon l'une quelconque des revendications 1 à 3, **caractérisé en ce** **que** le signe du coefficient de réflexion est déterminé à partir du comportement de phase du signal (13) réfléchi, dans lequel un signe négatif du coefficient de réflexion est présent, lorsqu'une variation brusque de phase (26) dans le signal (13) réfléchi est déterminée et un signal positif du coefficient de réflexion est présent, lorsqu'une évolution continue de la phase (27) du signal (13) réfléchi est déterminée.

5. Procédé selon la revendication 1 à 4, **caractérisé en ce** **que** l'étendue spatiale et la forme spatiale d'une surface limite d'une transition de matière sont identifiées par des zones contiguës (51, 52, 53, 54, 71, 72, 73) avec un comportement de phase identique.

6. Procédé selon l'une quelconque des revendications 1 à 5,
   **caractérisé en ce**
   **qu'**une inclusion (41, 42) composée d'une matière avec une permittivité qui se différencie de la permittivité de l'objet (44) environnant à examiner est déterminée, lorsqu'une zone contiguë avec un signe négatif suit une zone contiguë adjacente avec un signe positif ou inversement à l'intérieur de l'objet (44) à examiner.

7. Procédé selon la revendication 6,
   **caractérisé en ce**
   **que** l'inclusion (42) présente une matière avec une permittivité plus élevée que la matière de l'objet (44) à examiner environnant, lorsque d'abord une zone contiguë avec un signe négatif et ensuite une zone contiguë avec un signe positif sont détectées, et l'inclusion (41) présente une matière avec une permittivité plus faible que la matière (44) de l'objet à examiner environnant, lorsque d'abord une zone contiguë avec un signe positif et ensuite une zone contiguë avec un signe négatif sont détectées.

8. Dispositif pour la détection de structures, dans lequel les structures sont des arêtes, sur un objet (9) à examiner avec

   un dispositif d'antenne (2), qui comprend une pluralité d'antennes d'émission et de réception (3), dans lequel successivement respectivement une antenne d'émission (3) envoie des signaux hyperfréquence (12) et toutes les antennes de réception (3) acquièrent les signaux (13) réfléchis par l'objet (9) à examiner en valeur et phase et
   une unité d'évaluation (4), qui présente une unité de reproduction (5), qui reconstitue à partir des signaux (13) réfléchis acquis une reproduction tridimensionnelle de l'objet (9) à examiner, dans lequel l'unité d'évaluation (4) présente en outre :

   une unité de localisation (6), qui détermine une position spatiale d'une structure à partir de la valeur des signaux (13) réfléchis,
   une unité de phase (7), qui détermine le signe du coefficient de réflexion des signaux (13) réfléchis au niveau de la position spatiale de la structure, et
   une unité de groupement (8), qui identifie la structure sur la base de la disposition spatiale du signe du coefficient de réflexion,
   **caractérisé en ce**

   **que** l'unité de groupement (8) est réalisée de telle sorte qu'elle détermine une arête dans une matière (64) avec une permittivité élevée dans l'objet à examiner, lorsqu'une suite irrégulière de coefficients de réflexion (74) positifs et négatifs est présente dans une zone spatiale.

9. Dispositif selon la revendication 8,
   **caractérisé en ce**
   **que** l'unité de localisation (6) est réalisée de telle sorte qu'elle définit la position spatiale exacte de la structure par interpolation de la valeur de signal entre des points de balayage (21, 22, 23, 24) et/ou par création d'une autre reproduction dans la zone de la position spatiale déterminée initialement avec une grille plus étroite de points de balayage (22, 23, 24).

10. Dispositif selon la revendication 8 ou 9,

    **caractérisé en ce**
    **que** l'unité de phase (7) est réalisée de telle sorte qu'elle détermine le signe du coefficient de réflexion à partir du comportement de phase du signal (13) réfléchi,
    dans lequel un signe négatif du coefficient de réflexion est présent, lorsqu'elle détermine une variation brusque de phase (26) dans le signal réfléchi, et dans lequel
    un signe positif du coefficient de réflexion est présent, lorsqu'elle détermine une évolution continue de la phase (27) du signal réfléchi.

11. Dispositif selon l'une quelconque des revendications 8 à 10,
    **caractérisé en ce**
    **que** l'unité de groupement (8) est réalisée de telle sorte qu'elle identifie une étendue spatiale et une forme spatiale d'une surface limite d'une transition de matière par des zones contiguës (51, 52, 53, 54, 71, 72, 73) avec le même comportement de phase.

12. Dispositif selon l'une quelconque des revendications 8 à 11,
    **caractérisé en ce**
    **que** l'unité de groupement (8) est réalisée de telle sorte qu'elle détermine une inclusion (41, 42) composée d'une matière avec une permittivité qui se différencie de la permittivité de l'objet (44) à examiner environnant, lorsqu'une zone contiguë avec un signe négatif suit une zone contiguë adjacente avec un signe positif ou inversement (51, 52) à l'intérieur de l'objet (9) à examiner.

13. Dispositif selon l'une quelconque des revendications 8 à 12,
    **caractérisé en ce**
    **que** l'unité de groupement (8) est réalisée de telle sorte qu'elle détermine une inclusion (42) composée d'une matière avec une permittivité plus élevée que la matière (44) de l'objet (9) à examiner, lorsque d'abord une zone avec un signe négatif et ensuite une zone avec un signe positif (52) est détectée à l'intérieur de l'objet (9) à examiner ou qu'elle détermine une inclusion (41) composée d'une matière avec une permittivité plus faible que la matière (44) de l'objet (9) à examiner, lorsque d'abord une zone avec un signe positif et ensuite une zone avec un signe négatif (51) est détectée.

**14.** Dispositif selon l'une quelconque des revendications 8 à 13,
**caractérisé en ce**
**que** l'unité de reproduction (5) représente les structures (10) spatiales déterminées et/ou représente la permittivité déterminée des structures (10).

Fig. 1

Fig. 2

Fig. 3

Fig. 4

_80_

```
┌─────────────────────────────┐
│   Erfassen d. von DUT        │      81
│   reflekt. Signale (E_R)     │╱
│   mit einem Antennenarray    │
└─────────────────────────────┘
              │
              ▼
┌─────────────────────────────┐
│  Ermitteln d. räuml. Position einer │   82
│  Struktur aus Betrag von E_R │╱
└─────────────────────────────┘
              │
              ▼
┌─────────────────────────────┐
│  Verfeinern der Abbildung in │      83
│  Umgebung der ermittelten Position │╱
└─────────────────────────────┘
              │
              ▼
┌─────────────────────────────┐
│  Ermitteln des Vorzeichens d. Refl.- │   84
│  Koeffizienten an Position der Struktur │╱
└─────────────────────────────┘
              │
              ▼
┌─────────────────────────────┐
│  Identifizieren der Struktur aus │   85
│  Anordnung des Phasenverhaltens │╱
└─────────────────────────────┘
              │
              ▼
┌─────────────────────────────┐
│  Erstellen einer Abbildung des DUT │   86
│  mit d. ermittelten Strukturen │╱
└─────────────────────────────┘
```

# Fig. 5

**IN DER BESCHREIBUNG AUFGEFÜHRTE DOKUMENTE**

**In der Beschreibung aufgeführte Patentdokumente**

- DE 102009040450 A1
- US 6573855 B1
- DE 102006032735 A1
- DE 10346816 A1
- US 2006087471 A1
- JP 2007232734 A

**In der Beschreibung aufgeführte Nicht-Patentliteratur**

- **WAI LAM CHAN et al.** Imaging with terahertz radiation. *Reports on Progress in Physics,* 01. August 2007, vol. 70 (8), ISSN 0034-4885, 1325-1379